# EUROPÄISCHE PATENTSCHRIFT

(11) **EP 4 326 584 B1**
(45) Veröffentlichungstag und Bekanntmachung des Hinweises auf die Patenterteilung: **11.06.2025**
(21) Anmeldenummer: 22708456.3
(22) Anmeldetag: 09.02.2022
(51) Int. Cl.: B60R 25/24, H04W 12/062, H04L 9/32, G07C 9/00

(54) **VORRICHTUNG UND VERFAHREN ZUR AUTHENTIFIZIERUNG EINER BERECHTIGUNG EINER PERSON ZUR NUTZUNG EINES FAHRZEUGS**
DEVICE AND METHOD FOR AUTHENTICATING AN AUTHORIZATION FOR A PERSON TO USE A VEHICLE
DISPOSITIF ET PROCÉDÉ D'AUTHENTIFICATION D'UNE AUTORISATION POUR QU'UNE PERSONNE UTILISE UN VÉHICULE

(30) Priorität: 20.04.2021 DE 102021002073
(43) Veröffentlichungstag der Anmeldung: 28.02.2024
(73) Patentinhaber: Mercedes-Benz Group AG, 70372 Stuttgart (DE)
(72) Erfinder: BETZ, Konrad, 70176 Stuttgart (DE)
(74) Vertreter: Novagraaf Group
(86) Internationale Anmeldenummer: PCT/EP2022/053079
(87) Internationale Veröffentlichungsnummer: WO 2022/223165

(56) Entgegenhaltungen:
- DE-A1- 102019 211 453
- US-A1- 2017 236 351
- US-A1- 2018 099 643
- US-A1- 2020 198 580

## Beschreibung

Die Erfindung betrifft eine Vorrichtung zur Authentifizierung einer Berechtigung einer Person zur Nutzung eines Fahrzeugs gemäß dem Oberbegriff des Anspruchs 1.

Die Erfindung betrifft weiterhin ein Verfahren zur Authentifizierung einer Berechtigung einer Person zur Nutzung eines Fahrzeugs gemäß dem Oberbegriff des Anspruchs 4.

Aus der EP 1 467 322 A2 ist ein Kraftfahrzeug-Türschließsystem mit einem Kraftfahrzeugschloss bekannt, wobei das Kraftfahrzeugschloss motorisch entriegelbar und verriegelbar und auch motorisch öffenbar ausgestaltet ist. Es sind eine kraftfahrzeugseitige Steuerung und ein bedienpersonseitiges Mobilteil vorgesehen, wobei die Steuerung und das Mobilteil jeweils mit einer Kommunikationselektronik ausgestattet sind und dadurch eine bidirektionale Funkstrecke zwischen der Steuerung und dem Mobilteil aufbaubar ist. Über die Funkstrecke ist eine Systemfunktion des Kraftfahrzeug-Türschließsystems durch das Mobilteil auslösbar. Dabei ist die Funkstrecke zwischen der Steuerung und dem Mobilteil eine Funkstrecke nach dem Bluetooth-Industriestandard. Die durch das Mobilteil auslösbare Systemfunktion sind die Entriegelung des Kraftfahrzeugschlosses und das motorische Öffnen des Kraftfahrzeugschlosses.

Weiterhin ist aus der DE 10 2015 208 621 A1 eine Lokalisierungsvorrichtung zur Lokalisierung eines Objekts bekannt, wobei die Lokalisierungsvorrichtung für eine Auswahl einer von mehreren Lokalisierungstechnologien abhängig von der Distanz des zu lokalisierenden Objekts zu einem Kraftfahrzeug ausgebildet ist. Die Lokalisierungstechnologien umfassen eine UWB-Breitband-Übertragung.

Die US 2018/099643 A1 beschreibt ein System, umfassend ein Kommunikations-Gateway in einem Fahrzeug, das dazu konfiguriert ist, eine Bluetooth-Low-Energy-Kommunikationsverbindung mit einem tragbaren Gerät herzustellen. Weiterhin umfasst das System einen Sensor, der so konfiguriert ist, dass er mit dem Kommunikations-Gateway kommuniziert und dass er mit dem tragbaren Gerät unter Verwendung von Impulsfunk-Ultra-Wide-Band-Kommunikation kommuniziert. Das Kommunikations-Gateway ist so konfiguriert, dass es den Sensor anweist, eine Zwei-Wege-Entfernungsmessung mittels der Impulsfunk-Ultra-Wide-Band-Kommunikation mit dem tragbaren Gerät in einem festgelegten Zeitfenster durchzuführen, nachdem eine Kopplung zwischen dem Kommunikations-Gateway und dem tragbaren Gerät abgeschlossen ist. Weiterhin umfasst das System ein Lokalisierungsmodul, das mit dem Kommunikations-Gateway kommuniziert und dazu konfiguriert ist, einen Standort des tragbaren Geräts auf Grundlage der von dem Sensor durchgeführten Zwei-Wege-Entfernungsmessung zu bestimmen. Weiterhin umfasst das System ein passives Zugangs- und Startsystem, das so konfiguriert ist, dass es den Standort des tragbaren Geräts vom Lokalisierungsmodul empfängt und basierend auf dem Standort des tragbaren Geräts eine Tür des Fahrzeugs entriegelt und einen Start des Fahrzeug zulässt.

Die DE 10 2019 211 453 A1 beschreibt ein Verfahren zur Steuerung einer fernsteuerbaren Funktion, ein System zum Steuern der fernsteuerbaren Funktion mittels eines Kraftfahrzeugs sowie ein derartiges Kraftfahrzeug. Es erfolgt eine Authentifikation eines Datenaustauschs zwischen einer ersten Kommunikationsschnittstelle des Kraftfahrzeugs und einer zweiten Kommunikationsschnittstelle einer Steuereinrichtung der fernsteuerbaren Funktion. Hierbei wird zunächst eine örtliche Nähe des Kraftfahrzeugs zur Steuereinrichtung überprüft, indem zusätzlich zu einer Kommunikationsverbindung zwischen den Kommunikationsschnittstellen ein Signalaustausch zwischen einer ersten Sendeempfangseinheit des Kraftfahrzeugs und einer zweiten Sendeempfangseinheit der Steuereinrichtung aufgebaut wird. Durch Auswerten einer Zeitdauer des Signalaustauschs wird eine Entfernung zwischen dem Kraftfahrzeug und der Steuereinrichtung festgestellt. Falls diese kleiner als eine vorgegebene Grenzentfernung ist, erfolgen eine Authentifikation und ein Zulassen des Datenaustauschs über die aufgebaute Kommunikationsverbindung sowie ein Deaktivieren des ersten Signalaustauschs.

Die US 2017/236351 A1 beschreibt eine Vorrichtung zur Steuerung eines Ver- und Entriegelns und Startens eines Fahrzeugs, umfassend ein erstes Kommunikationsgerät, das im Fahrzeug angebracht ist, wobei das erste Kommunikationsgerät mit einer Steuereinheit des Fahrzeugs verbunden ist. Die Vorrichtung umfasst weiterhin ein zweites Kommunikationsgerät, das in einem mobilen Gerät angeordnet ist. Das erste Kommunikationsgerät und das zweite Kommunikationsgerät können miteinander in einem ersten Kommunikationsmodus miteinander kommunizieren, um eine Authentifizierung des mobilen Geräts durch das Fahrzeug durchzuführen. Die Authentifizierung autorisiert das Verriegeln und Entriegeln und Starten des Fahrzeugs. Weiterhin können das erste Kommunikationsgerät und das zweite Kommunikationsgerät in einem zweiten Kommunikationsmodus miteinander kommunizieren, um Daten zu ermitteln, die für eine Position des mobilen Geräts in Bezug auf das Fahrzeug repräsentativ sind. Die Ausführung des Befehls zum Verriegeln und Entriegeln und Starten des Fahrzeugs durch die Steuereinheit hängt von den Daten ab, die die Position des mobilen Geräts in Bezug auf das Fahrzeug darstellen.

Die US 2020/198580 A1 beschreibt ein passives Zugangssystem für ein Fahrzeug mit einem tragbaren Schlüsselanhänger und einer am Fahrzeug angeordneten Kommunikations- und Steuereinheit. Die Kommunikations- und Steuereinheit ist zur Steuerung einer Funktion des Fahrzeugs konfiguriert. Der tragbare Schlüsselanhänger und die Kommunikations- und Steuereinheit sind für eine Kommunikation von Ultrabreitbandsignalen zwischen ihnen konfiguriert. Wenn die Funktion des Fahrzeugs ausgelöst wird, initiiert die Kommunikations- und Steuereinheit eine doppelseitige Ultrabreitband-Entfernungsmessung mit dem tragbaren Schlüsselanhänger, wobei der tragbare Schlüsselanhänger einen ersten Abstand zwischen dem tragbaren Schlüsselanhänger und der Kommunikations- und Steuereinheit bestimmt und die Kommunikations- und Steuereinheit einen zweiten Abstand zwischen dem tragbaren Schlüsselanhänger und der Kommunikations- und Steuereinheit bestimmt. Die Kommunikations- und Steuereinheit ist dazu ausgebildet, die Steuerung der Funktion des Fahrzeugs zu verhindern, wenn ein aus dem ersten und dem zweiten Abstand ermittelter Endabstand größer als ein vorgegebener Abstand ist.

Der Erfindung liegt die Aufgabe zu Grunde, ein gegenüber dem Stand der Technik verbessertes Verfahren und eine verbesserte Vorrichtung zur Authentifizierung einer Berechtigung einer Person zur Nutzung eines Fahrzeugs anzugeben.

Die Aufgabe wird erfindungsgemäß gelöst durch eine Vorrichtung, welche die im Anspruch 1 angegebenen Merkmale aufweist, und durch ein Verfahren, welches die im Anspruch 4 angegebenen Merkmale aufweist.

Vorteilhafte Ausgestaltungen der Erfindung sind Gegenstand der Unteransprüche.

Die erfindungsgemäße Vorrichtung zur Authentifizierung einer Berechtigung einer Person zur Nutzung eines Fahrzeugs umfasst eine fahrzeugseitige Steuerungseinheit, welche mit mehreren jeweils als Bluetooth-Schnittstelle ausgebildeten und beabstandet zueinander am und/oder im Fahrzeug anordbaren oder angeordneten Knoten gekoppelt ist. Die Vorrichtung umfasst weiterhin ein tragbares Mobilteil mit einer Bluetooth-Schnittstelle, welches ausgebildet ist, zu jedem Zeitpunkt mit genau einem der Knoten eine insbesondere bidirektional und nach dem Bluetooth-Industriestandard ausgebildete Bluetooth-Funkstrecke aufzubauen. Das Mobilteil und die Steuerungseinheit umfassen zusätzlich jeweils eine Ultra-Breitband-Schnittstelle zum Aufbau einer insbesondere bidirektional ausgebildeten Ultra-Breitband-Nahbereichsfunkstrecke. Dabei ist die Steuerungseinheit ausgebildet, bei Erkennung einer von dem Mobilteil über die Bluetooth-Funkstrecke übertragenen Berechtigung das Mobilteil als berechtigt zu authentifizieren und anhand einer mit dem Mobilteil über die Ultra-Breitband-Nahbereichsfunkstrecke durchgeführten Kommunikation eine Position des Mobilteils zu ermitteln. Weiterhin ist die Steuerungseinheit ausgebildet, in Abhängigkeit der Position des Mobilteils Verbindungsqualitäten möglicher Bluetooth-Funkstrecken zwischen dem Mobilteil und den Knoten zu ermitteln und dann, wenn eine Bluetooth-Funkstrecke zu einem der Knoten eine höhere Verbindungsqualität aufweist als eine aktuell aufgebaute Bluetooth-Funkstrecke zu einem aktivierten Knoten, den aktuell für diese Bluetooth-Funkstrecke aktivierten Knoten zu deaktivieren und den zum Aufbau der Bluetooth-Funkstrecke mit der höheren Verbindungsqualität vorgesehenen Knoten zu aktivieren.

Das Mobilteil bildet dabei insbesondere einen digitalen Fahrzeugschlüssel. Die im und/oder am Fahrzeug, beispielsweise an Stoßfängern, positionierten Knoten der Steuerungseinheit ermöglichen eine lückenlose Bluetooth-Funkabdeckung im und um das Fahrzeug. Bei einer Annäherung eines Fahrzeugnutzers mit dem Mobilteil verbindet sich dieses mit einem beliebigen Knoten, wobei durch eine Bewegung des Mobilteils relativ zum Fahrzeug und/oder im Fahrzeug und somit relativ zu den Knoten Abschattungseffekte durch das Fahrzeug hervorgerufen werden können, welche die Bluetooth-Funkstrecke zwischen dem Mobilteil und der Steuerungseinheit beeinträchtigen können. Mittels der vorliegenden Vorrichtung ist es aufgrund der Überwachung der Verbindungsqualität in besonders vorteilhafter Weise möglich, bereits vor oder unmittelbar bei einem Eintreten solcher Beeinträchtigungen den aktuellen Knoten zu deaktivieren und einen anderen Knoten zu aktivieren, zu welchem eine Bluetooth-Funkstrecke mit höherer Verbindungsqualität aufgebaut werden kann. Diese aktive Deaktivierung und Aktivierung verhindert einen aus einer Abschattung resultierenden Verbindungsabbruch zwischen dem Mobilteil und der Steuerungseinheit und daraus folgende so genannte Supervision Timeouts, welche dazu führen können, dass eine Zeitdauer von bis zu 20 Sekunden erforderlich ist, bis eine neue Funkverbindung zwischen dem Mobilteil und einem Knoten aufgebaut ist. Die Vorrichtung ermöglicht durch die aktive Deaktivierung und Aktivierung eine Minimierung einer Unterbrechungszeit der Bluetooth-Funkstrecke zwischen Mobilteil und Steuerungseinheit, so dass für einen Fahrzeugnutzer die Fahrzeugnutzung, insbesondere ein Zugang zum Fahrzeuginneren und ein Motorstart, zumindest nahezu durchgehend sichergestellt werden kann. Längere Wartezeiten können somit vermieden werden.

In einer möglichen Ausgestaltung der Vorrichtung sind die Bluetooth-Schnittstelle des Mobilteils und die Knoten zum Aufbau einer Bluetooth-Funkstrecke nach dem Bluetooth-Low-Energy-Industriestandard ausgebildet. Unter Bluetooth-Low-Energy, kurz auch als Bluetooth LE oder BLE bezeichnet, wird eine Funktechnik verstanden, mit der sich Geräte in einer Umgebung von etwa zehn Metern vernetzen lassen. Im Vergleich zu einer Funkstrecke oder Funkverbindung gemäß dem "klassischen" Bluetooth-Industriestandard zeichnet sich BLE durch einen deutlich geringeren Energieverbrauch und deutlich geringere Kosten bei ähnlichem Kommunikationsbereich aus.

In einer weiteren möglichen Ausgestaltung der Vorrichtung ist das Mobilteil ein mobiles Endgerät, wie beispielsweise ein Smartphone, eine so genannte Smartwatch oder ein so genannter Wearable Computer, kurz auch als Wearable bezeichnet. Eine solche Ausbildung des Mobilteils ermöglicht es, dass kein separater Fahrzeugschlüssel erforderlich ist, sondern Funktionen desselben auf einem Endgerät ausgeführt werden, welches ein Fahrzeugnutzer meist oder immer mit sich führt.

In dem erfindungsgemäßen Verfahren zur Authentifizierung einer Berechtigung einer Person zur Nutzung eines Fahrzeugs wird zwischen einem tragbaren Mobilteil und genau einem von mehreren, jeweils als Bluetooth-Schnittstelle ausgebildeten, beabstandet zueinander am und/oder im Fahrzeug angeordneten und mit einer Steuerungseinheit gekoppelten Knoteneine insbesondere bidirektional und nach dem Bluetooth-Industriestandard ausgebildete Bluetooth-Funkstrecke aufgebaut . Zusätzlich wird zwischen dem Mobilteil und der Steuerungseinheit eine insbesondere bidirektional ausgebildete Ultra-Breitband-Nahbereichsfunkstrecke aufgebaut. Mittels der Steuerungseinheit wird bei Erkennung einer von dem Mobilteil über die Bluetooth-Funkstrecke übertragenen Berechtigung das Mobilteil als berechtigt authentifiziert und anhand einer mit dem Mobilteil über die Ultra-Breitband-Nahbereichsfunkstrecke durchgeführten Kommunikation wird eine Position des Mobilteils ermittelt. In Abhängigkeit der Position des Mobilteils werden mittels der Steuerungseinheit Verbindungsqualitäten möglicher Bluetooth-Funkstrecken zwischen dem Mobilteil und den Knoten ermittelt. Weist eine Bluetooth-Funkstrecke zu einem der Knoten eine höhere Verbindungsqualität auf als eine aktuell aufgebaute Bluetooth-Funkstrecke zu einem aktivierten Knoten, wird mittels der Steuerungseinheit der aktuell für diese Bluetooth-Funkstrecke aktivierte Knoten deaktiviert und der zum Aufbau der Bluetooth-Funkstrecke mit der höheren Verbindungsqualität vorgesehene Knoten wird aktiviert.

Mittels des vorliegenden Verfahrens ist es aufgrund der Überwachung der Verbindungsqualität in besonders vorteilhafter Weise möglich, bereits vor oder unmittelbar bei einem Eintreten einer Beeinträchtigung der Bluetooth-Funkstrecke den aktuellen Knoten zu deaktivieren und einen anderen Knoten zu aktivieren, zu welchem eine Bluetooth-Funkstrecke mit höherer Verbindungsqualität aufgebaut werden kann. Diese aktive Deaktivierung und Aktivierung verhindert einen aus einer Abschattung resultierenden Verbindungsabbruch zwischen dem Mobilteil und der Steuerungseinheit und daraus folgende so genannte Supervision Timeouts, welche dazu führen können, dass eine Zeitdauer von bis zu 20 Sekunden erforderlich ist, bis eine neue Funkverbindung zwischen dem Mobilteil und einem Knoten aufgebaut ist. Das Verfahren ermöglicht durch die aktive Deaktivierung und Aktivierung eine Minimierung einer Unterbrechungszeit der Bluetooth-Funkstrecke zwischen Mobilteil und Steuerungseinheit, so dass für einen Fahrzeugnutzer die Fahrzeugnutzung, insbesondere ein Zugang zum Fahrzeuginneren und ein Motorstart, zumindest nahezu durchgehend sichergestellt werden kann. Längere Wartezeiten können somit vermieden werden.

Ausführungsbeispiele der Erfindung werden im Folgenden anhand einer Zeichnung näher erläutert.

Dabei zeigt:

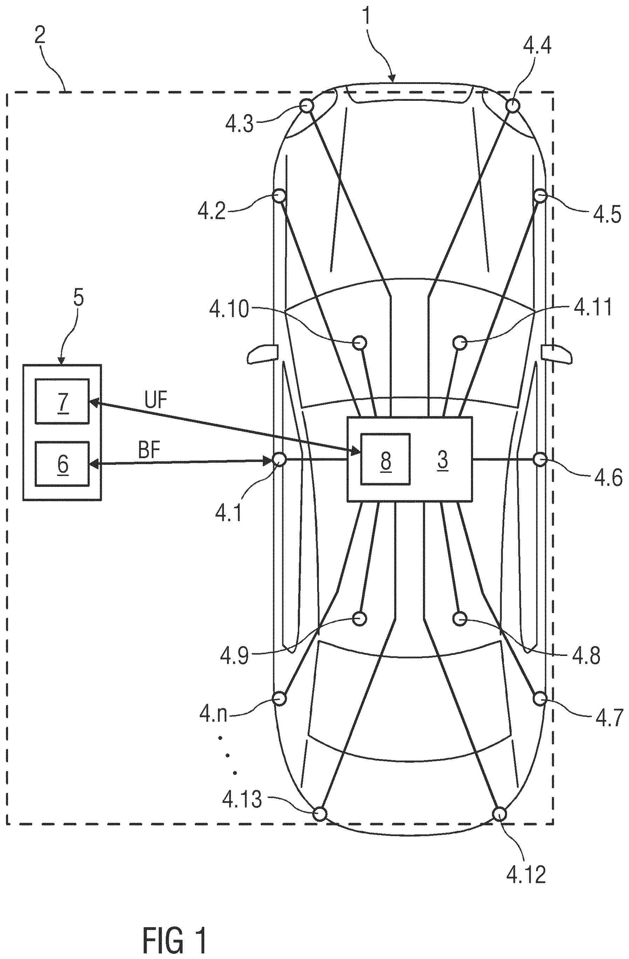

- Fig. 1: schematisch eine Draufsicht eines Fahrzeugs und eine Vorrichtung zur Authentifizierung einer Berechtigung einer Person zur Nutzung des Fahrzeugs.

In der einzigen Figur 1 sind eine Draufsicht eines Fahrzeugs 1 und eine Vorrichtung 2 zur Authentifizierung einer Berechtigung einer Person zur Nutzung des Fahrzeugs 1 dargestellt. Das Fahrzeug 1 kann dabei Bestandteil der Vorrichtung 2 sein.

Die Vorrichtung 2 ist zur Realisierung eines schlüssellosen Zugangs- und Berechtigungssystems ausgebildet und umfasst eine fahrzeugseitige Steuerungseinheit 3, welche mit mehreren Knoten 4.1 bis 4.n gekoppelt ist. Die Knoten sind jeweils als Bluetooth-Schnittstelle, insbesondere nach dem Bluetooth-Low-Energy-Industriestandard, ausgebildet und beabstandet zueinander am Fahrzeug 1, beispielsweise an Stoßfängern, und im Fahrzeug 1 angeordnet.

Die Vorrichtung 2 umfasst weiterhin ein tragbares Mobilteil 5 mit einer Bluetooth-Schnittstelle 6. Das Mobilteil 5 ist dabei ausgebildet, zu jedem Zeitpunkt mit genau einem der Knoten 4.1 bis 4.n eine Bluetooth-Funkstrecke BF aufzubauen. Beispielsweise ist das Mobilteil 5 ein mobiles Endgerät, wie zum Beispiel ein Smartphone, eine so genannte Smartwatch oder ein so genannter Wearable Computer. Auch kann das Mobilteil 5 als herkömmlicher elektronischer Fahrzeugschlüssel als separates Bauteil ausgebildet sein.

Weiterhin umfassen das Mobilteil 5 und die Steuerungseinheit 3 zusätzlich jeweils eine Ultra-Breitband-Schnittstelle 7, 8 zum Aufbau einer Ultra-Breitband-Nahbereichsfunkstrecke UF.

Nähert sich ein Fahrzeugnutzer mit dem Mobilteil 5 dem Fahrzeug 1, verbindet sich das Mobilteil 5 über die Bluetooth-Funkstrecke BF mit einem der Knoten 4.1 bis 4.n, im dargestellten Ausführungsbeispiel beispielsweise mit dem Knoten 4.1. Über die Bluetooth-Funkstrecke BF wird dabei eine Berechtigung an die Steuerungseinheit 3 übertragen, welche bei ordnungsgemäßem Empfang dieser Berechtigung das Mobilteil 5 als berechtigt authentifiziert. Solange die Bluetooth-Funkstrecke BF und daraus folgend die Authentifizierung aktiv sind, ist es dem Fahrzeugnutzer möglich, das Fahrzeug 1, beispielsweise durch Berühren einer berührungssensiblen Fläche, zu entriegeln und somit Zutritt zum Fahrzeuginneren zu haben. Auch ist es dem Fahrzeugnutzer nach dem Zutritt zum Fahrzeuginneren bei aktiver Bluetooth-Funkstrecke BF und daraus folgend aktiver Authentifizierung möglich, das Fahrzeug 1 zu starten.

Um zu vermeiden, dass bei einer Bewegung des Fahrzeugnutzers mit dem Mobilteil 5 relativ zum Fahrzeug 1 die Bluetooth-Funkstrecke BF aufgrund einer auftretenden Abschattung unterbrochen wird und anschließend, beispielsweise aufgrund eines so genannten Supervision Timeouts, ein langer Zeitraum zur Verbindung des Mobilteils 5 mit einem der Knoten 4.1 bis 4.n erforderlich ist, wird mittels der Steuerungseinheit 3 anhand einer mit dem Mobilteil 5 über die Ultra-Breitband-Nahbereichsfunkstrecke UF durchgeführten Kommunikation eine Position des Mobilteils 5 ermittelt.

In Abhängigkeit der Position des Mobilteils 5 ermittelt die Steuerungseinheit 3 Verbindungsqualitäten möglicher Bluetooth-Funkstrecken BF zwischen dem Mobilteil 5 und den Knoten 4.1 bis 4.n. Ermittelt die Steuerungseinheit 3 dabei, dass eine Bluetooth-Funkstrecke BF zu einem der Knoten 4.1 bis 4.n eine höhere Verbindungsqualität aufweist als eine aktuell aufgebaute Bluetooth-Funkstrecke BF zu einem aktivierten Knoten 4.1 bis 4.n, deaktiviert diese den aktuell für diese Bluetooth-Funkstrecke BF aktivierten Knoten 4.1 bis 4.n und aktiviert den zum Aufbau der Bluetooth-Funkstrecke BF mit der höheren Verbindungsqualität vorgesehenen Knoten 4.1 bis 4.n. Ermittelt die Steuerungseinheit 3 beispielsweise im dargestellten Ausführungsbeispiel, dass die Verbindungsqualität mit dem aktiven Knoten 4.1 geringer ist als eine mögliche Verbindungsqualität mit dem Knoten 4.2, deaktiviert diese den Knoten 4.1 und aktiviert den Knoten 4.2, so dass zwischen dem Mobilteil 5 und dem Knoten 4.2 eine neue Bluetooth-Funkstrecke BF aufgebaut wird.

Das heißt, mit einem anhand der Ultra-Breitband-Nahbereichsfunkstrecke UF ermittelten Ortungsergebnis kann die Steuerungseinheit 3 gezielt und aktiv eine aktuelle Bluetooth-Funkstrecke BF beenden, wenn ein anderer Knoten 4.1 bis 4.n eine bessere Verbindungsqualität ermöglicht. Somit kann die Steuerungseinheit 3 durch gezieltes Ansteuern der Knoten 4.1 bis 4.n je nach Ortungsergebnis steuern, welcher neue Knoten 4.1 bis 4.n die neue Bluetooth-Funkstrecke BF zum Mobilteil 5 aufbauen soll. Bei einem solchen aktiven Beenden der Bluetooth-Funkstrecke BF, kann eine neue Bluetooth-Funkstrecke BF zu einem anderen Knoten 4.1 bis 4.n sehr schnell aufgebaut werden.

## Patentansprüche

1. Vorrichtung (2) zur Authentifizierung einer Berechtigung einer Person zur Nutzung eines Fahrzeugs (1)
- mit einer fahrzeugseitigen Steuerungseinheit (3), welche mit mehreren jeweils als Bluetooth-Schnittstelle ausgebildeten und beabstandet zueinander am und/oder im Fahrzeug (1) anordbaren oder angeordneten Knoten (4.1 bis 4.n) gekoppelt ist,
- mit einem tragbaren Mobilteil (5) mit einer Bluetooth-Schnittstelle (6), welches ausgebildet ist, zu jedem Zeitpunkt mit genau einem der Knoten (4.1 bis 4.n) eine Bluetooth-Funkstrecke aufzubauen, wobei
- das Mobilteil (5) und die Steuerungseinheit (3) zusätzlich jeweils eine Ultra-Breitband-Schnittstelle (7, 8) zum Aufbau einer Ultra-Breitband-Nahbereichsfunkstrecke umfassen und
- die Steuerungseinheit (3) ausgebildet ist,
- bei Erkennung einer von dem Mobilteil (5) über die Bluetooth-Funkstrecke übertragenen Berechtigung das Mobilteil (5) als berechtigt zu authentifizieren,
- anhand einer mit dem Mobilteil (5) über die Ultra-Breitband-Nahbereichsfunkstrecke durchgeführten Kommunikation eine Position des Mobilteils (5) zu ermitteln,
**dadurch gekennzeichnet, dass** die Steuerungseinheit (3) weiterhin ausgebildet ist,
- in Abhängigkeit der Position des Mobilteils (5) Verbindungsqualitäten möglicher Bluetooth-Funkstrecken zwischen dem Mobilteil (5) und den Knoten (4.1 bis 4.n) zu ermitteln und
- dann, wenn eine Bluetooth-Funkstrecke zu einem der Knoten (4.1 bis 4.n) eine höhere Verbindungsqualität aufweist als eine aktuell aufgebaute Bluetooth-Funkstrecke zu einem aktivierten Knoten (4.1 bis 4.n), den aktuell für diese Bluetooth-Funkstrecke aktivierten Knoten (4.1 bis 4.n) zu deaktivieren und den zum Aufbau der Bluetooth-Funkstrecke mit der höheren Verbindungsqualität vorgesehenen Knoten (4.1 bis 4.n) zu aktivieren.

2. Vorrichtung (2) nach Anspruch 1,
**dadurch gekennzeichnet, dass** die Bluetooth-Schnittstelle (6) des Mobilteils (5) und die Knoten (4.1 bis 4.n) zum Aufbau einer Bluetooth-Funkstrecke nach dem Bluetooth-Low-Energy-Industriestandard ausgebildet sind.

3. Vorrichtung (2) nach Anspruch 1 oder 2,
**dadurch gekennzeichnet, dass** das Mobilteil (5) ein mobiles Endgerät ist.

4. Verfahren zur Authentifizierung einer Berechtigung einer Person zur Nutzung eines Fahrzeugs (1), wobei
- zwischen einem tragbaren Mobilteil (5) und genau einem von mehreren, jeweils als Bluetooth-Schnittstelle ausgebildeten, beabstandet zueinander am und/oder im Fahrzeug angeordneten und mit einer Steuerungseinheit (3) gekoppelten Knoten (4.1 bis 4.n) eine Bluetooth-Funkstrecke aufgebaut wird
- zusätzlich zwischen dem Mobilteil (5) und der Steuerungseinheit (3) eine Ultra-Breitband-Nahbereichsfunkstrecke aufgebaut wird und
- mittels der Steuerungseinheit (3)
- bei Erkennung einer von dem Mobilteil (5) über die Bluetooth-Funkstrecke übertragenen Berechtigung das Mobilteil (5) als berechtigt authentifiziert wird und
- anhand einer mit dem Mobilteil (5) über die Ultra-Breitband-Nahbereichsfunkstrecke durchgeführten Kommunikation eine Position des Mobilteils (5) ermittelt wird,
**dadurch gekennzeichnet, dass** mittels der Steuerungseinheit (3) weiterhin
- in Abhängigkeit der Position des Mobilteils (5) Verbindungsqualitäten möglicher Bluetooth-Funkstrecken zwischen dem Mobilteil (5) und den Knoten (4.1 bis 4.n) ermittelt werden und
- dann, wenn eine Bluetooth-Funkstrecke zu einem der Knoten (4.1 bis 4.n) eine höhere Verbindungsqualität aufweist als eine aktuell aufgebaute Bluetooth-Funkstrecke zu einem aktivierten Knoten (4.1 bis 4.n), der aktuell für diese Bluetooth-Funkstrecke aktivierte Knoten (4.1 bis 4.n) deaktiviert wird und der zum Aufbau der Bluetooth-Funkstrecke mit der höheren Verbindungsqualität vorgesehene Knoten (4.1 bis 4.n) aktiviert wird.

## Claims

1. A device (2) for authenticating a person's authorization to use a vehicle (1)
- with a control unit (3) on the vehicle, which is coupled to a plurality of nodes (4.1 to 4.n), each designed as a Bluetooth interface and which can be arranged or are arranged at a distance from one another on and/or in the vehicle (1),
- with a portable mobile part (5) with a Bluetooth interface (6), which is designed to establish a Bluetooth radio link with exactly one of the nodes (4.1 to 4.n) at any time, wherein
- the mobile part (5) and the control unit (3) each additionally comprise an ultra-wideband interface (7, 8) for setting up an ultra-wideband short-range radio link, and
- the control unit (3) is designed
- to authenticate the mobile part (5) as authorized when an authorization transmitted by the mobile part (5) via the Bluetooth radio link is detected,
- to determine a position of the mobile part (5) on the basis of a communication carried out with the mobile part (5) via the ultra-wideband short-range radio link,
**characterized in that** the control unit (3) is also designed,
- to determine connection qualities of possible Bluetooth radio links between the mobile part (5) and the nodes (4.1 to 4.n) depending on the position of the mobile part (5) and
- to deactivate the node (4.1 to 4.n) currently activated for this Bluetooth radio link and to activate the node (4.1 to 4.n) intended for establishing the Bluetooth radio link with the higher connection quality if a Bluetooth radio link to one of the nodes (4.1 to 4.n) has a higher connection quality than a Bluetooth radio link currently established to an activated node (4.1 to 4.n).

2. The device (2) according to claim 1,
**characterized in that** the Bluetooth interface (6) of the mobile part (5) and the nodes (4.1 to 4.n) are designed to establish a Bluetooth radio link according to the Bluetooth low-energy industry standard.

3. The device (2) according to claim 1 or 2,
**characterized in that** the mobile part (5) is a mobile terminal.

4. A method for authenticating a person's authorization to use a vehicle (1), wherein
- a Bluetooth radio link is established between a portable mobile part (5) and exactly one of a plurality of nodes (4.1 to 4.n), each designed as a Bluetooth interface, arranged at a distance from one another on and/or in the vehicle and coupled to a control unit (3)
- an ultra-wideband short-range radio link is additionally established between the mobile part (5) and the control unit (3), and
- by means of the control unit (3)
- when an authorization transmitted by the mobile part (5) via the Bluetooth radio link is detected, the mobile part (5) is authenticated as authorized, and
- based on a communication carried out with the mobile part (5) via the ultra-wideband short-range radio link, a position of the mobile part (5) is determined,
**characterized in that** by means of the control unit (3) furthermore
- connection qualities of possible Bluetooth radio links between the mobile part (5) and the nodes (4.1 to 4.n) are determined as a function of the position of the mobile part (5), and
- if a Bluetooth radio link to one of the nodes (4.1 to 4.n) has a higher connection quality than a currently established Bluetooth radio link to an activated node (4.1 to 4.n), the node (4.1 to 4.n) currently activated for this Bluetooth radio link is deactivated and the node (4.1 to 4.n) intended for establishing the Bluetooth radio link with the higher connection quality is activated.

## Revendications

1. Dispositif (2) permettant d'authentifier une autorisation d'une personne à utiliser un véhicule (1)
- comportant une unité de commande (3) côté véhicule couplée à plusieurs nœuds (4.1 à 4.n) respectivement configurés comme une interface Bluetooth et pouvant être disposés ou étant disposés à distance les uns des autres sur le véhicule (1) et/ou dans celui-ci,
- comportant une partie mobile (5) portable comportant une interface Bluetooth (6) et configurée pour établir une liaison radio Bluetooth à tout moment avec exactement l'un des nœuds (4.1 à 4.n), dans lequel
- la partie mobile (5) et l'unité de commande (3) comprennent en outre respectivement une interface à ultralarge bande (7, 8) permettant d'établir une liaison radio à courte portée à ultralarge bande, et
- l'unité de commande (3) est configurée pour
- authentifier la partie mobile (5) comme autorisée lors d'une reconnaissance d'une autorisation transmise par la partie mobile (5) par l'intermédiaire de la liaison radio Bluetooth,
- déterminer une position de la partie mobile (5) à l'aide d'une communication effectuée avec la partie mobile (5) par l'intermédiaire de la liaison radio à courte portée à ultralarge bande,
**caractérisé en ce que** l'unité de commande (3) est en outre configurée pour
- déterminer, en fonction de la position de la partie mobile (5), des qualités de connexion de liaisons radio Bluetooth possibles entre la partie mobile (5) et les nœuds (4.1 à 4.n), puis
- lorsqu'une liaison radio Bluetooth vers l'un des nœuds (4.1 à 4.n) présente une qualité de connexion plus élevée qu'une liaison radio Bluetooth actuellement établie vers un nœud (4.1 à 4.n) activé, désactiver le nœud (4.1 à 4.n) actuellement activé pour ladite liaison radio Bluetooth et activer le nœud (4.1 à 4.n) prévu pour l'établissement de la liaison radio Bluetooth avec la qualité de connexion plus élevée.

2. Dispositif (2) selon la revendication 1,
**caractérisé en ce que** l'interface Bluetooth (6) de la partie mobile (5) et les nœuds (4.1 à 4.n) sont configurés pour établir une liaison radio Bluetooth selon la norme industrielle Bluetooth Low Energy.

3. Dispositif (2) selon la revendication 1 ou 2,
**caractérisé en ce que** la partie mobile (5) est un terminal mobile.

4. Procédé permettant d'authentifier une autorisation d'une personne à utiliser un véhicule (1), dans lequel
- une liaison radio Bluetooth est établie entre une partie mobile (5) portable et exactement l'un parmi plusieurs nœuds (4.1 à 4.n) respectivement configurés comme une interface Bluetooth, disposés à distance les uns des autres sur le véhicule et/ou dans celui-ci et couplés à une unité de commande (3)
- en outre, une liaison radio à courte portée à ultralarge bande est établie entre la partie mobile (5) et l'unité de commande (3), et
- au moyen de l'unité de commande (3)
- la partie mobile (5) est authentifiée comme autorisée lors d'une reconnaissance d'une autorisation transmise par la partie mobile (5) par l'intermédiaire de la liaison radio Bluetooth, et
- une position de la partie mobile (5) est déterminée à l'aide d'une communication effectuée avec la partie mobile (5) par l'intermédiaire de la liaison radio à courte portée à ultralarge bande,
**caractérisé en ce que,** au moyen de l'unité de commande (3), en outre
- des qualités de connexion de liaisons radio Bluetooth possibles entre la partie mobile (5) et les nœuds (4.1 à 4.n) sont déterminées en fonction de la position de la partie mobile (5), puis
- lorsqu'une liaison radio Bluetooth vers l'un des nœuds (4.1 à 4.n) présente une qualité de connexion plus élevée qu'une liaison radio Bluetooth actuellement établie vers un nœud (4.1 à 4.n) activé, le nœud (4.1 à 4.n) actuellement activé pour ladite liaison radio Bluetooth est désactivé et le nœud (4.1 à 4.n) prévu pour l'établissement de la liaison radio Bluetooth avec la qualité de connexion plus élevée est activé.
